Europäisches Patentamt

European Patent Office

Office européen des brevets

(11) Veröffentlichungsnummer: **0 402 349**
**A1**

## (12) EUROPÄISCHE PATENTANMELDUNG

(21) Anmeldenummer: 90890173.9

(22) Anmeldetag: **01.06.90**

(51) Int. Cl.5: **H01M 10/14, B65G 57/03**

(30) Priorität: **07.06.89 AT 1400/89**

(43) Veröffentlichungstag der Anmeldung:
**12.12.90 Patentblatt 90/50**

(84) Benannte Vertragsstaaten:
**AT CH DE ES FR GB IT LI SE**

(71) Anmelder: **Akkumulatorenfabrik Dr. Leopold Jungfer**

**A-9181 Feistritz im Rosental(AT)**

(72) Erfinder: **Frey, Helmut**
**Ressnigweg 34**
**A-9170 Ferlach(AT)**

(74) Vertreter: **Holzer, Walter, Dipl.-Ing. et al**
**Patentanwälte Dipl.-Ing. Dr.techn. Schütz Alfred Dipl.-Ing. Holzer Walter Dipl.-Ing. Pfeifer Otto Fleischmanngasse 9**
**A-1040 Wien(AT)**

(54) **Vorrichtung zur Satzbildung von Akkumulatorenplatten.**

(57) Vorrichtung zur Satzbildung von Akkumulatorenplatten, mit einer endlosen Transportkette (1) für im Abstand aufeinanderfolgende Plattenpaare, die jeweils aus einer in einen Separator eingetaschten Platte und einer darüberliegenden Gegenplatte bestehen, wobei die Transportebene höher als die Transportebene eines der Transportkette in Transportrichtung nachgeschalteten endlosen Transportbandes (5) zur Aufnahme einer aus einem Magazin zugeführten Satzendplatte und/oder eines aus eingetaschter Platte und Gegenplatte bestehenden, von der Transportkette (1) zugeführten Plattenpaares angeordnet ist, wogegen die Transportebene eines in Transportrichtung nachgeschalteten endlosen Abtransportbandes (12) zur Bildung eines Plattensatzes und zum Abtransport desselben tiefer als die Transportebene des Transportbandes (5) liegt, und wobei im Bewegungsbereich sowohl des Transportbandes (5) als auch des Abtransportbandes (12) Stoppeinrichtungen (10, 13) für die Platten (3, 4, 6) bzw. Plattensätze (15) vorgesehen sind.

EP 0 402 349 A1

Xerox Copy Centre

Die Erfindung betrifft eine Vorrichtung zur Satzbildung von Akkumulatorenplatten, mit einer ersten Transporteinrichtung für im Abstand aufeinanderfolgende Plattenpaare, die jeweils aus einer in einen Separator eingetaschten Platte und einer darüberliegenden Gegenplatte bestehen, und mit einem der Transporteinrichtung in Transportrichtung nach- geschalteten, höhenverstellbaren endlosen Ab- transportband zur Bildung eines Plattensatzes und zum Abtransport desselben.

Bei einer Vorrichtung dieser Art wurden bisher Endplatten auf die gebildeten Plattensätze von Hand aufgebracht, was nicht nur zu Unbenauigkeiten und zu fallweisen Abweichungen von der gewünschten Endplattenlage führte, sondern auch mit einem beträchtlichen Arbeitsaufwand verbunden war.

Aufgabe der Erfindung ist die Schaffung einer Vorrichtung zur Satzbildung von Akkumulatorenplatten, welche die angeführten Nachteile vermeidet und eine selbsttätige Satzbildung einschließlich der Endplatte mit großer Genauigkeit ermöglicht.

Diese Aufgabe wird erfindungsgemäß dadurch gelöst, daß die erste Transporteinrichtung durch eine endlose Transportkette gebildet ist, deren Transportebene höher als die Transportebene eines der Transportkette in Transportrichtung nach- geschalteten endlosen Transportbandes zur Auf- nahme einer auf einem Magazin zugeführten Satzendplatte und/oder eines aus eingetaschter Platte und Gegenplatte bestehenden, von der Transportkette zugeführten Plattenpaares angeordnet ist, wogegen die Transportebene des Abtransportbandes tiefer als die Transportebene des Transportbandes angeordnet ist, und daß im Bewegungsbereich sowohl des Transportbandes als auch des Abtransportbandes Stoppeinrichtungen für die Platten bzw. Plattensätze vorgesehen sind.

Durch diese Maßnahmen wird eine genaue Positionierung jeder Endplatte und der auf diese abgelegten Platten sowie eine automatisierte Bildung der Plattensätze gesichert.

Gemäß einer bevorzugten Ausführungsform der Erfindung ist dem Transportband an dessen Abgabeende eine elastische Andrückwalze zugeordnet. Hiedurch wird eine exakte Übergabe an das die Satzbildung ermöglichende Abtransportband gewährleistet.

Weitere Merkmale der Erfindung werden nachfolgend an Hand der schematischen Zeichnung näher beschrieben, die eine erfindungsgemäße Vorrichtung in Seitenansicht zeigt.

Auf einer endlosen kontinuierlich bewegten Transportkette 1, die aus mehreren parallelen Einheiten, z.B. Rollenketten besteht, werden Plattenpaare 2 aufeinanderfolgend im Abstand zueinander abgelegt. Jedes Plattenpaar 2 besteht aus einer in einen Separator eingetaschten Platte 3 und einer darüberliegenden Gegenplatte 4. In Transportrichtung (Pfeil A) der Transportkette 1 ist im Anschluß an diese ein Transportband 5 angeordnet, auf dem jeweils eine aus einem angedeuteten, senkrecht zur Transportrichtung stehenden Endplattenmagazin entnommene Endplatte 6 abgelegt wird. Zwischen der Transportebene der Transportkette 1 und der Transportebene des Transportbandes 5 ist ein Niveauunterschied B vorhanden, der vorteilhaft durch die größere Stärke der Transportkette 1 gegenüber dem Transportband 5 gegeben ist bzw. dadurch, daß das Umlenkrad 8 der Transportkette 1 und die Umlenkrolle 9 des Transportbandes 5 auf einer gemeinsamen Achse 7 montiert sind, wobei der Durchmesser des Umlenkrades 8 der Transportkette 1 größer als der Durchmesser der Umlenkrolle 9 des Transportbandes 5 ist.

Eine erste Stoppeinrichtung 10 ist in der Bewegungsbahn des zumindest aus zwei Einzelbähdern, Rundschnüren od.dgl. bestehenden Transportbandes 5 angeordnet und besteht beispielsweise aus einem pneumatisch, hydraulisch oder elektromechanisch betätigten Riegel 11, der vorzugsweise in vertikaler Richtung zwischen den Bändern, Schnüren od.dgl. des Transportbandes 5 heb- und senkbar angeordnet ist, um die auf dem Transportband 5 abgelegte Endplatte 6 solange anzuhalten, bis bedingt durch den Niveauunterschied B ein Plattenpaar 2 von der Transportkette 1 kommend in Richtung des Pfeiles C auf die Endplatte 6 geschoben wird. Anschließend wird der Riegel 11 abgesenkt, so daß das auf diese Weise gebildete Plattenpaket über das Transportband 5 auf ein zumindest aus zwei parallelen Bändern, Rundschnüren od.dgl. bestehenden, intermittierend betätigten Abtransportband 12 weitergeleitet wird, welches in Transportrichtung hinter dem Transportband 5 vorgesehen ist, wobei die Transportebene des Abtransportbandes 12 tiefer als die Transportebene des Transportbandes 5 liegt.

In der Bewegungsbahn des Abtransportbandes 12 ist eine zweite Stoppeinrichtung 13 angeordnet, die beispielsweise ebenfalls aus einem pneuma- tisch, hydraulisch oder elektromagnetisch betätig- ten Riegel 14 besteht, der vorzugsweise in vertikaler Richtung zwischen den Bändern, Schnüren od.dgl. des Abtransportbandes 12 heb- und senkbar angeordnet ist, um das vom Transportband 5 übergeleitete Paket aus Endplatte 6 und Plattenpaar 2 solange anzuhalten, bis eine vorbestimmte Zahl weiterer Plattenpaare 2 vom Transportband 5 übergeleitet worden ist. Nach Absenkung des Riegels 14 wird der auf diese Weise gebildete Plattensatz 15 auf dem Abtransportband 12 um einen Schritt weitertransportiert, wobei gleichzeitig der Riegel 11 im Bereich des Transportbandes 5 ange-

2

hoben wird, um die nächstfolgend abgelegte Endplatte 6 anzuhalten, worauf sich der geschilderte Vorgang wiederholt.

Zur Anpassung an eine vorbestimmte Plattenzahl der auf dem Abtransportband 12 gebildeten Plattensätze 15 ist das Abtransportband 12 höhenverstellbar ausgebildet. Damit die vom Transportband 5 zum Abtransportband 12 weitergeleiteten Plattenpakete bzw. Plattenpaare beim Übergang ihre Lage zueinander beibehalten ist oberhalb der endseitigen Umlenkrolle 16 des Transportbandes 5 eine mit dieser zusammenwirkende Andrückwalze 17 aus Elastomermaterial angeordnet.

Es versteht sich, daß der Antrieb der einzelnen Transporteinrichtungen und der Stoppeinrichtungen mittels einer Steuereinrichtung synchronisiert erfolgt.

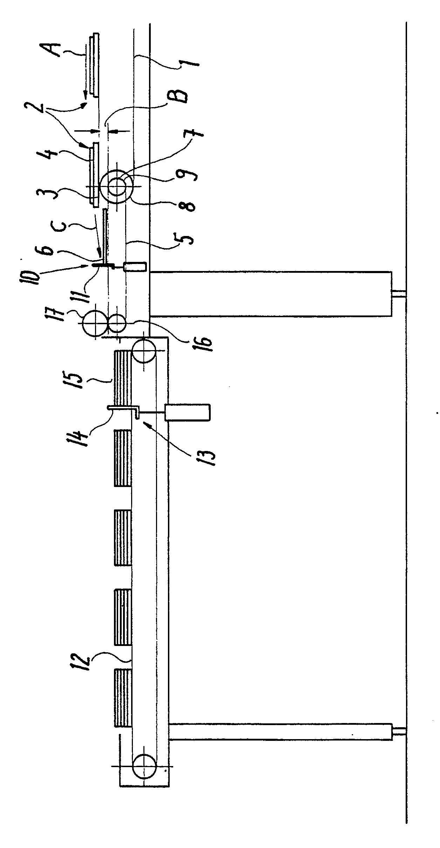

## Ansprüche

1. Vorrichtung zur Satzbildung von Akkumulatorenplatten, mit einer ersten Transporteinrichtung für im Abstand aufeinanderfolgende Plattenpaare, die jeweils aus einer in einen Separator eingetaschten Platte und einer darüberliegenden Gegenplatte bestehen, und mit einem der Transporteinrichtung in Transportrichtung nachgeschalteten, höhenverstellbaren endlosen Abtransportband zur Bildung eines Plattensatzes und zum Abtransport desselben, dadurch gekennzeichnet, daß die erste Transporteinrichtung durch eine endlose Transportkette (1) gebildet ist, deren Transportebene höher als die Transportebene eines der Transportkette in Transportrichtung nachgeschalteten endlosen Transportbandes (5) zur Aufnahme einer aus einem Magazin zugeführten Satzendplatte und/oder eines aus eingetaschter Platte und Gegenplatte bestehenden, von der Transportkette (1) zugeführten Plattenpaares angeordnet ist, wogegen die Transportebene des Abtransportbandes (12) tiefer als die Transportebene des Transportbandes (5) angeordnet ist, und daß im Bewegungsbereich sowohl des Transportbandes (5) als auch des Abtransportbandes (12) Stoppeinrichtungen (10, 13) für die Platten (3, 4, 6) bzw. Plattensätze (15) vorgesehen sind.

2. Vorrichtung nach Anspruch 1, dadurch gekennzeichnet, daß dem Transportband (5) an dessen Abgabeende eine elastische Andrückwalze (17) zugeordnet ist.

3. Vorrichtung nach Anspruch 1 oder 2, dadurch gekennzeichnet, daß die Stoppeinrichtungen (10, 13) durch pneumatische, hydraulische oder elektromechanisch betätigte Riegel (11, 14) gebildet sind.

## Europäisches Patentamt

# EUROPÄISCHER RECHERCHENBERICHT

EP 90890173.9

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
| A | US - A - 4 759 433 (KRAFT) * Fig. 1 * -- | 1 | H 01 M 10/14 B 65 G 57/03 |
| A | DE - B - 1 236 412 (SCHICK) * Fig. 1 * -- | 1 | |
| A | DE - B2 - 2 207 488 (YUASA) * Fig. 1,2 * -- | 1 | |
| A | EP - A1 - 0 096 626 (ACOME) * Zusammenfassung; Fig. 6 * ---- | 1 | |

RECHERCHIERTE SACHGEBIETE (Int Cl⁵)

H 01 M
B 65 G

Der vorliegende Recherchenbericht wurde für alle Patentansprüche erstellt.

| Recherchenort | Abschlußdatum der Recherche | | Prüfer |
|---|---|---|---|
| WIEN | 07-09-1990 | LUX | |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82